(19) **Europäisches Patentamt**

**European Patent Office**

**Office européen des brevets**

(11) **EP 0 819 743 B1**

(12) **EUROPÄISCHE PATENTSCHRIFT**

(45) Veröffentlichungstag und Bekanntmachung des Hinweises auf die Patenterteilung:
**11.09.2002   Patentblatt 2002/37**

(51) Int Cl.$^7$: **C09D 157/04**, C09D 183/02, C08J 7/04, C08L 23/02

(21) Anmeldenummer: **97110664.6**

(22) Anmeldetag: **30.06.1997**

(54) **Sperrschichtzusammensetzung**

Barrier coating composition

Composition de revêtement de barrière

(84) Benannte Vertragsstaaten:
**DE FR GB**

(30) Priorität: **15.07.1996   DE 19628481**

(43) Veröffentlichungstag der Anmeldung:
**21.01.1998   Patentblatt 1998/04**

(73) Patentinhaber:
- **PLASTIC OMNIUM GmbH**
  **61184 Karben 1 (DE)**
- **FEW Forschungs- und Entwicklungsgesellschaft Wolfen mbH**
  **06766 Wolfen (DE)**

(72) Erfinder:
- **Probst, Werner**
  **63628 Bad Soden-Salmünster (DE)**
- **Knobloch, Peter**
  **93105 Tegernheim (DE)**
- **Roth, Christoph, Dr.**
  **06118 Halle (DE)**
- **Müller, Hans Jürgen**
  **06792 Sandersdorf (DE)**
- **Apsel, Frank**
  **06231 Bad Dürrenberg (DE)**

(74) Vertreter: **Reinhard - Skuhra - Weise & Partner**
**Friedrichstrasse 31**
**80801 München (DE)**

(56) Entgegenhaltungen:
- **Keine einschlägigen Dokumente gefunden**

**EP 0 819 743 B1**

## Beschreibung

Die Erfindung betrifft eine Sperrschichtzusammensetzung für Polyolefinkörper, insbesondere Hohlkörper aus Polyolefinen, die den Durchtritt organischer Stoffe, beispielsweise von flüchtigen Kohlenwasserstoffen und Aromaten wie Mineralölen, Benzin oder Pflanzenschutzmitteln, zumindest wesentlich verringert.

Bedingt durch die ausgezeichnete chemische Beständigkeit, der guten mechanischen Eigenschaften sowie der Vielfalt an Formgebungsmöglichkeiten finden Hohlkörper insbesondere aus Polyethylen hoher Dichte eine breite Anwendung als Lagerbehälter für Kohlenwasserstoffe, wie beispielsweise Benzin oder Mineralöle.

Beim Einsatz als Kraftstofftanks für PKWs ist es nachteilig, daß Polyethylen eine gewisse Durchlässigkeit für Kraftstoffe aufweist. Es gibt zahlreiche Vorschläge, um diese nachteilige Diffusion aus den Kunststoffhohlkörpern zu verringern. Diese Vorschläge umfassen beispielsweise die

  a) Schaffung von Laminatstrukturen aus Polyamiden;
  b) Oberflächenmodifizierung; und
  c) Anbringen einer Sperrschicht durch Lackierung.

Großvolumige, blasgeformte Hohlkörper mit Laminatstrukturen sind sehr konstenintensiv und erfüllen noch nicht alle Prüfanforderungen für Kraftstofftanks. Bei Kraftstofftanks haben sich Verfahren durchgesetzt, die die Permeation durch Oberflächenmodifizierung verringern. Beispiele dafür sind die Sulfonierung (DE 1 953 371, US 3 740 258), die Fluorierung (JP 61 230 919, Plast. Eng. (1978) 34, S. 40, Gas Aktuell (1993), 45, S. 9) sowie die Behandlung mit Mikrowellenplasma in Form einer Plasmapolymerisation (DE 4 318 086, EP 302 457).

Es ist weiterhin bekannt, mittels Zersetzung im Plasma aus organischen Siliziumverbindungen $SiO_x$-Schichten mit Sperrwirkung abzuscheiden (Vak. Prax. (1991), 3, S. 22).

In der JP 62 130 823 wird das Aufbringen von Metallschichten durch thermische Zersetzung von Carbonylen auf Basis von Eisen, Nickel oder Chrom beschrieben. Dieses Verfahren erfordert aber einen sehr hohen technologischen Aufwand und beeinträchtigt die Herstellungskosten sehr.

In der EP 558 886 und EP 551 819 wird vorgeschlagen, nach einer Plasmabehandlung die Hohlkörperinnenflächen mit Isocyanaten zu behandeln, die bei Feuchtigkeitszutritt vernetzen. Dieses Verfahren ist nachteilig, da es sowohl den Einsatz hochtoxischer Verbindungen erforderlich macht als auch fertigungstechnisch schwierig durchführbar ist.

Weiterhin ist bekannt, durch Aufbringung von Lackschichten die Permeation zu unterdrücken. Als Lackbindemittel werden dabei vorzugsweise Polyepoxide in Kombination mit plastifizierenden Polyurethanen beschrieben (DE 3 447 022). Des weiteren sind auch in Kobination mit einer Sulfonierung als Oberflächenbehandlung Harnstoff-Formaldehyd-Harze, Melamin-Formaldehyd-Harze (GB 2 069 870) oder Epoxidharze bekannt (JP 55 55938). Diese Verfahren erfordern aber eine aufwendige Vorbehandlung mit aggressiven Gasen und verhindern die Permeation nur unzureichend.

Es ist deshalb eine Aufgabe der vorliegenden Erfindung, eine Sperrschichtzusammensetzung zu schaffen, die keiner Vorbehandlung in Form einer Sulfonierung oder einer Fluorierung bedarf und die nichttoxische Lackbindemittel enthält.

Diese Aufgabe wird erfindungsgemäß durch die im Anspruch 1 naher gekennzeichnete Sperrschichtzusammensetzung gelöst. Diese Sperrschichtzusammensetzung ist bei Polyolefinkörpern, insbesondere bei Polyolefinhohlkörpern, anwendbar, bei denen sie zumindest einseitig aufgebracht wird. Erfindungsgemäß sind aber auch weitere Anwendungsgebiete mit umfaßt. Hierzu gehört beispielsweise die Auftragung einer Sperrschicht auf Kotflügel von Kraftfahrzeugen.

Diese Sperrschichtzusammensetzung weist als weitere Vorteile auf, daß sie eine gute Haftung auf Polyolefinen besitzt sowie die Permeation wirkungsvoll erniedrigt. Die Sperrschicht wird zumindest einseitig auf Hohlkörper aus Polyolefinen aufgebracht. Bevorzugt ist als Polyolefin ein Polyethylen. Die Sperrschicht verringert die Permeation organischer Stoffe, beispielsweise organischer Lösungsmittel, flüchtiger Kohlenwasserstoffe und Aromaten, beispielsweise von Benzin und Mineralölen, von Pflanzenschutzmitteln, Kosmetika usw., also von Materialien, insbesondere Flüssigkeiten, bei denen eine Diffusion verhindert werden soll. Der Hohlkörper ist in einer Ausführungsform der Erfindung ein Kraftstofftank für Kraftfahrzeuge.

Erfindungsgemäß wird somit zumindest auf einer Seite eines Polyolefinhohlkörpers zusätzlich eine als Sperrschicht wirkende Zusammensetzung, beispielsweise durch Lackierung, aufgebracht. Diese Schicht enthält im wesentlichen die nachfolgenden Bestandteile:

  a) 40-70 Gew.-% eines oder mehrerer epoxidhaltiger Metalloxidsole;
  b) 25-55 Gew.-% eines Bindemittelpolymers aus Maleinsäure-Maleinsäureanhydrid-Vinylmonomer-Terpolymerisat und/oder Maleinsäure-Vinylmonomer-Copolymerisat mit einer molaren Zusammensetzung von 50-75% eines Vinylmonomeren, 5-50% Maleinsäure und 0-20% Maleinsäureanhydrid; und

c) 0,1-5 Gew.-% eines Katalysators auf der Basis eines oder mehrerer tertiärer Amine.

Bevorzugte Ausführungsformen sind dem Anspruch 2 zu entnehmen.

Das epoxidhaltige Metalloxidsol basiert auf Glycidylalkoxysilanen.

In einer Ausführungsform der Erfindung enthält die Sperrschichtzusammensetzung zusätzlich 0,1 - 25 Gew.-%, bezogen auf die Gesamtzusammensetzung, an Zusatzstoffen, die die Funktion der Zusammensetzung als Sperrschicht nicht oder nur geringfügig beeinträchtigen. In bevorzugten Ausgestaltungen der Erfindung liegen die Zusatzstoffe in einer Menge von 3 - 20 Gew.-% oder 5 - 15 Gew.-% vor, je bezogen auf die Gesamtzusammensetzung. Bevorzugt handelt es sich um Farbstoffe oder Farbstoffpigmente. Erfindungsgemäß sind auch Füllstoffe einsetzbar, insoweit sie die Sperrschichtwirkung der erfindungsgemäßen Zusammensetzung nicht oder nur unwesentlich beeinträchtigen.

Die erfindungsgemäß verwendeten Bindemittelpolymere sind technisch einfacherweise beispielsweise durch Radikalpolymerisation von Maleinsäureanhydrid und Vinylmonomeren in Ketonen als Lösungsmittel darstellbar. Durch Hydrolyse können dann leicht die entsprechenden Co- oder Terpolymerisate hergestellt werden.

Als Vinylmonomere können beispielsweise Styrol, Alkylstyrol, Vinylester, Vinylether, beispielsweise Methylvinylether, Acryl- und Methacrylsäureester verwendet werden. Das Molekulargewicht des Bindemittelpolymers beträgt vorzugsweise etwa 5000 bis etwa 500000 D.

Die erfindungsgemäßen Metalloxidsole können in bekannter Weise beispielsweise durch saure Hydrolyse von Glycidylsilan in Wasser/Lösungsmittelgemischen hergestellt werden, wie dies beispielsweise in J. of Non.Crystalline Solids, 81 (1986) 365 beschrieben ist. Vorzugsweise werden Gemische aus Aceton und Wasser als Lösungsmittel für die Hydrolyse verwendet.

Beispiele für erfindungsgemäß verwendbare Glycidylsilane sind Glycidyloxypropyltriethoxysilan oder Glycidyloxypropyltrimethoxysilan.

Zusätzlich können die Metalloxidsole neben Silizium auch Aluminium oder Titan in Form eines Oxids enthalten, wobei Glycidylsilane in Gegenwart von Aluminiumalkoxiden oder Titanalkoxiden hydrolysiert werden. Beispiele für solche Mischoxidsole sind Gemische aus

60 Gew.-Teile Tetraethoxysilan
25 Gew.-Teile Glycidyloxypropyltriethoxysilan
15 Gew.-Teile Aluminiumtriisobutylat

50 Gew.-Teile Tetraethoxysilan
25 Gew.-Teile Glycidyloxypropyltrimethoxysilan
25 Gew.-Teile 2-Ethylhexyltitanat

Als Katalysatoren für die Beschichtungsmasse eignen sich alle bekannten tert. Amine, wie sie für die Vernetzung von Epoxidharzen üblich sind. Beispiele dafür sind Triethylamin, Tributylamin oder DABCO® (1,4-Diazabicyclo [2.2.2]octan. Die Konzentration beträgt 0,1 bis 5 Gew.-%, bezogen auf den Gesamtfeststoffgehalt der Lösung.

Als Lösungsmittel für die Beschichtung werden vorzugsweise Ketone verwendet, beispielsweise Aceton oder Methylethylketon.

Die zu beschichtenden Polyolefinhohlkörper können aus Polyethylen, Polypropylen, Mischungen dieser mit anderen Polymeren sowie Copolymeren bestehen. Weiterhin bevorzugt sind Hohlkörper aus Poly(ethylenterephthalat) (PET). Die Polyolefinkörper können beispielsweise durch Blasen oder Spritzguß hergestellt werden.

Die erfindungsgemäße Zusammensetzung wird von außen auf den Polyolefin-Hohlkörper (in vorteilhafter Weise innen und/oder außen in der Kunststoffblase) angebracht, wobei das Aufbringen durch Wärme und andere Behandlungsarten, auch Plasmabeschichtung, unterstützt werden kann. Verfeinerungen des Sprühverfahrens oder des Tauchverfahrens und der nachträglichen Austrocknung bringen hier unterstützende Effekte.

Aus dem obengenannten wird klar, daß ein solches Verfahren auch für Pflanzenschutz- oder für lebensmittelhaltige Kunststoffbehälter verwendbar ist, da die erfindungsgemäßen Sperrschichten nicht nur den Kraftstoff selbst oder Lösemittel, sondern auch Aromaten oder Aromastoffe usw. hinsichtlich ihrer Permeationsneigung eindämmen können. Überraschenderweise gelingt mit Hilfe der erfindungsgemäßen Sperrschichtzusammensetzung eine Verbindung der expoxidhaltigen Metalloxidsole mit Polyolefinen bei gleichzeitiger akzeptabler Haftung und niedriger Sprödigkeit.

Durch Beimengung von Pigmentfarbstoffen, beispielsweise in einem Anteil von 10 - 25 Gew.-%, bezogen auf die Gesamtzusammensetzung, können die mit der erfindungsgemäßen Zusammensetzung beschichteten Kunststoffkörper nicht nur eine dekorative Schicht (Farbe) erhalten, sondern es kann hierdurch auch eine weitere Verbesserung der Eigenschaften erreicht werden, beispielsweise bei der Verwendung von Kotflügeln, Kosmetikflaschen etc. aus Polyolefinen.

Die Beschichtung kann durch bekannte Auftragsverfahren wie Sprüh- oder Tauchlackierung erfolgen, wobei vorzugsweise eine Schichtdicke der Sperrschicht von 5 bis 20 μm gewählt wird.

Vor der Beschichtung ist es vorteilhaft, in bekannter Weise zur Verbesserung der Haftung eine Oberflächenvorbehandlung, beispielsweise eine Beflammung oder Koronabehandlung, vorzunehmen oder bei formstabilen Körpern Restwärme aus dem Blasprozeß zur Beschichtung zu benutzen. Aus der Blasmaschine kommende Hohlkörper weisen häufig eine Restwärme von über 65°C auf und werden üblicherweise in Kühlformen abgekühlt. Diese Restwärme der nackten Kunststoffblase kann bevorzugt zur Beschichtung der Sperrschicht eingesetzt werden. In einigen Fällen ist jedoch auch eine Auskühlung vor der Beschichtung notwendig, um die Formgenauigkeit des Hohlkörpers sicherzustellen.

Polymerschichten nur aus Maleinsäure-Co- oder -Terpolymerisaten zeigen eine sehr geringe Sperrwirkung und mangelhafte Haftung auf Polyolefine. Auch durch Zugabe bekannter Vernetzungsmittel wie Polyolen, Polyaminen oder Diepoxiden kann diese nicht wesentlich verbessert werden. Ebenso eignen sich Metalloxidschichten, aufgetragen als Sole, nicht als Barriereschichten, da sie spröde sind und ebenfalls nur eine sehr geringe Sperrwirkung zeigen. Erst in der erfindungsgemäßen Kombination wird überraschenderweise die gewünschte Barrierewirkung erzielt.

Die Sperrschichten mit der erfindungsgemäßen Zusammensetzung zeichnen sich durch eine gute Adhäsion auf den hiermit beschichteten Hohlkörpern aus. Das Aufbringen der Sperrschicht kann ökonomisch mit bekannten Lackiertechniken erfolgen. Ein weiterer Vorteil besteht in der geringen Toxizität der Komponenten, die keine kostenintensiven Vorkehrungen für die Handhabung erfordern.

Die mit der erfindungsgemäßen Sperrschicht beschichteten Hohlkörper eignen sich als Vorratsbehälter für organische Stoffe, insbesondere für Kohlenwasserstoffe und Mineralöle, Pflanzenschutzmittel, Kosmetika und andere Stoffe, beispielsweise Flüssigkeiten, bei denen eine Diffusion verhindert oder zumindest im wesentlichen herabgesetzt werden soll. Die mit der erfindungsgemäßen Sperrschicht beschichteten Hohlkörper werden beispielsweise als Kraftstofftanks in Kraftfahrzeugen angewandt. Nachfolgend wird die Erfindung anhand von Ausführungsbeispielen und einem Vergleichsbeispiel näher erläutert.

Beispiel 1 (Vergleichsbeispiel)

Eine 0,5 Literflasche aus Polyethylen (Lupolen® 4261) mit einer Wandstärke von 0,5 mm wird durch Tauchlackierung mit folgender Beschichtungslösung behandelt:

> 500 ml Methylethylketon
> 40 g Bisphenol A-diglycidether
> 9,6 g Isophorondiamin

Die Schicht wird 30 Minuten luftgetrocknet und anschließend 30 Minuten bei 80°C nachgetrocknet. Es wird eine Trockenschichtstärke von 4,1 μm erhalten. Die beschichtete Flasche wird dann mit 250 ml Benzin gefüllt und mit einem Verschluß aus Teflon® versehen. Der durch Permeation durch die Gefäßwände verursachte Benzinverlust bei Raumtemperatur wird durch Wägung nach 21 Tagen und 50 Tagen bestimmt. Als Vergleich dient eine unbeschichtete Flasche. Die Barrierewirkung der Sperrschicht (SW, in %) ergibt sich aus folgender Gleichung

$$SW\ (\%) = 100 - \frac{C_1}{C_2} \cdot 100$$

$C_1$ = Gewichtsverlust beschichtete Probe

$C_2$ = Gewichtsverlust unbeschichtete Probe

Es wird ein Wert von 41% erhalten.

Ausführungsbeispiele

Beispiel 2

Analog Beispiel 1 wird eine Beschichtung einer beflammten Flasche mit folgender Lösungszusammensetzung vorgenommen:

| 100 ml | Aceton |
|---|---|
| 140 ml | Methylethylketon |
| 262 ml | Metalloxidsol (10%ig in Aceton) auf der Basis von Glycidyloxypropyltriethoxysilan |
| 11,25 g | Maleinsäure-Maleinsäureanhydrid-Styrol-Terpolymerisat, Molekulare Zusammensetzung 40:10:50), mittleres Molekulargewicht ist 90000 D |
| 1,4 g | Triethylamin |

Es wird eine Sperrwirkung von 82% erhalten.

Beispiel 3

Analog Beispiel 2 erfolgt eine Beschichtung mit folgender Lösungszusammensetzung:

| 200 ml | Aceton |
|---|---|
| 130 ml | Methylethylketon |
| 170 ml | Metalloxidsol (10%ig in Aceton) auf Basis von Glycidyloxypropyltrimethoxysilan |
| 20,5 g | Maleinsäure-Styrol-Copolymer, Molekulare Zusammensetzung 50:50, mittleres Molekulargewicht 128000 D |
| 1,0 g | Triethylamin |

Es wird eine Sperrwirkung von 88% erhalten.

Beispiel 4

Analog Beispiel 2 erfolgt eine Beschichtung mit folgender Lösungszusammensetzung:

| 150 ml | Aceton |
|---|---|
| 110 ml | Methylethylketon |
| 240 ml | Metalloxidsol (10%ig in Aceton) auf der Basis von 50 Gew.-% Tetraethoxysilan 25 Gew.-% 2-Ethylhexyltitanat 25 Gew.-% Glycidyloxypropyltriethoxysilan |
| 18,5 g | Maleinsäure-Styrol-Copolymer, Molekulare Zusammensetzung 50:50, mittleres Molekulargewicht 60000 D |
| 1,2 g | Triethylamin |

Es wird eine Sperrwirkung von 85% erhalten.

Beispiel 5

Analog Beispiel 2 erfolgt eine Beschichtung mit folgender Lösungszusammensetzung:

| 180 ml | Aceton |
|---|---|
| 130 ml | Methylethylketon |
| 187 ml | Metalloxidsol (10%ig in Aceton) auf der Basis von Glycidyloxypropyltrimethoxysilan |
| 18,6 g | Vinylmethylether-Maleinsäure-Copolymer, Molekulare Zusammensetzung 50:50, mittleres Molekulargewicht 82000 D |
| 1,4 g | Triethylamin |

Es wird eine Sperrwirkung von 89% erhalten.

**Patentansprüche**

1. Sperrschichtzusammensetzung für Polyolefinkörper,
   **dadurch gekennzeichnet,**

**daß** die Sperrschichtzusammensetzung im wesentlichen die nachfolgenden Bestandteile aufweist:

a) 40-70 Gew.-% eines oder mehrerer epoxidhaltiger Metalloxidsole;
b) 25-55 Gew.-% eines Bindemittelpolymers aus Maleinsäure-Maleinsäureanhydrid-Vinylmonomer-Terpolymerisat und/oder Maleinsäure-Vinylmonomer-Copolymerisat mit einer molaren Zusammensetzung von 50-75% eines Vinylmonomeren, 5-50% Maleinsäure und 0-20% Maleinsäureanhydrid; und
c) 0,1-5 Gew.-% eines Katalysators auf der Basis eines oder mehrerer tertiärer Amine.

**2.** Sperrschichtzusammensetzung nach Anspruch 1,
**dadurch gekennzeichnet,**
**daß** die Sperrschichtzusammensetzung im wesentlichen die nachfolgenden Bestandteile aufweist:

a) 45 - 65 Gew.-% eines oder mehrerer epoxidhaltiger Metalloxidsole;
b) 30 - 50 Gew.-% eines Bindemittelpolymers aus Maleinsäure-Maleinsäureanhydrid-Vinylmonomer-Terpolymerisat und/oder Maleinsäure-Vinylmonomer-Copolymerisat mit einer molaren Zusammensetzung von 50-75% eines Vinylmonomeren, 5-50% Maleinsäure und 0-20% Maleinsäureanhydrid; und
c) 2 - 5 Gew.-% eines Katalysators auf der Basis eines oder mehrerer tertiärer Amine;

oder:

a) 45 - 55 Gew.-% eines oder mehrerer epoxidhaltiger Metalloxidsole;
b) 40 - 50 Gew.-% eines Bindemittelpolymers aus Maleinsäure-Maleinsäureanhydrid-Vinylmonomer-Terpolymerisat und/oder Maleinsäure-Vinylmonomer-Copolymerisat mit einer molaren Zusammensetzung von 50-75% eines Vinylmonomeren, 5-50% Maleinsäure und 0-20% Maleinsäureanhydrid; und
c) 3 - 5 Gew.-% eines Katalysators auf der Basis eines oder mehrerer tertiärer Amine.

**3.** Sperrschichtzusammensetzung nach Anspruch 1 oder 2,
**dadurch gekennzeichnet,**
**daß** die epoxidhaltigen Metalloxidsole durch Säurehydrolyse behandelte Glycidylalkoxisilane sind.

**4.** Sperrschichtzusammensetzung nach einem oder mehreren der vorhergehenden Ansprüche,
**dadurch gekennzeichnet,**
**daß** das epoxidhaltige Metalloxidsol ein Mischhydrolysat aus Glycidylsilan mit Alkoxilaten auf der Basis von Aluminium und/oder Titan ist.

**5.** Sperrschichtzusammensetzung nach einem oder mehreren der vorhergehenden Ansprüche,
**dadurch gekennzeichnet,**
**daß** das Ter- oder Copolymerisat als Vinylmonomer Methylvinylether, Styrol und/oder einen Acrylester enthält.

**6.** Sperrschichtzusammensetzung nach einem oder mehreren der vorhergehenden Ansprüche,
**dadurch gekennzeichnet,**
**daß** das Metalloxidsol ein Mischoxidsol aus Tetraethoxysilan, Glycidyloxypropyltriethoxysilan und Aluminiumtriisobutylat oder Tetraethoxysilan, Glycidyloxypropyltrimethoxysilan und 2-Ethylhexyltitanat ist.

**7.** Sperrschichtzusammensetzung nach einem oder mehreren der vorhergehenden Ansprüche,
**dadurch gekennzeichnet,**
**daß** der Vernetzungskatalysator Triethylamin, Tributylamir oder DABCO® ist.

**8.** Sperrschichtzusammensetzung nach einem oder mehreren der vorhergehenden Ansprüche,
**dadurch gekennzeichnet,**
**daß** zusätzlich 0,1 - 25 Gew.-%, bezogen auf die Gesamtzusammensetzung, an mit der Sperrschichtzusammensetzung kompatiblen Zusatzstoffen enthalten sind.

**9.** Sperrschichtzusammensetzung nach Anspruch 8,
**dadurch gekennzeichnet,**
**daß** die Zusatzstoffe Farbstoffe sind.

**10.** Polyolefinkörper,

**dadurch gekennzeichnet,**

**daß** er mindestens eine Beschichtung mit einer Sperrschichtzusammensetzung nach einem oder mehreren der vorhergehenden Ansprüche aufweist.

**11.** Polyolefinkörper nach Anspruch 10,
**dadurch gekennzeichnet,**
**daß** das Polyolefin Polyethylen oder Polypropylen oder PE ist.

**12.** Verwendung der Zusammensetzung nach einem oder mehreren
der vorhergehenden Ansprüche zur Aufbringung mindestens einer Sperrschicht auf Polyolefinkörper, bevorzugt Polyolefinhohlkörper.

**Claims**

**1.** Barrier layer coating composition for polyolefin bodies,
**characterized in that**
said barrier layer composition essentially contains the following components:

    a) 40-70% by weight of one or more epoxide-containing metal oxide sols
    b) 25-55% by weight of a binding agent polymer consisting of a terpolymer of maleic acid-maleic anhydride-vinyl monomers and/or a copolymer of maleic acid-vinyl monomers having a composition by mole of 50-75% of a vinyl monomer, 5-50% of maleic acid, and 0-20% of maleic anhydride; and
    c) 0.1-5% by weight of a catalyst on the basis of one or more tertiary amines.

**2.** Barrier layer composition according to claim 1, **characterized in that** said barrier layer composition essentially contains the following components:

    a) 45-65% by weight of one or more epoxide-containing metal oxide sols
    b) 30-50% by weight of a binding agent polymer consisting of a terpolymer of maleic acid-maleic anhydride-vinyl monomers and/or a copolymer of maleic acid-vinyl monomers having a composition by mole of 50-75% of a vinyl monomer, 5-50% of maleic acid, and 0-20% of maleic anhydride; and
    c) 2-5% by weight of a catalyst on the basis of one or more tertiary amines;

or

    a) 45-55% by weight of one or more epoxide-containing metal oxide sols
    b) 40-50% by weight of a binding agent polymer consisting of a terpolymer of maleic acid-maleic anhydride-vinyl monomers and/or a copolymer of maleic acid-vinyl monomers having a composition by mole of 50-75% of a vinyl monomer, 5-50% of maleic acid, and 0-20% of maleic anhydride; and
    c) 3-5% by weight of a catalyst on the basis of one or more tertiary amines.

**3.** Barrier layer composition according to claim 1 or 2, **characterized in that**
said epoxide-containing metal oxide sols are glycidylalkoxysilanes treated by acid hydrolysis.

**4.** Barrier layer composition according to one or more of the preceding claims,
**characterized in that**
said epoxide-containing metal oxide sol is a mixed hydrolysate of glycidylsilane together with alkoxylates on the basis of aluminum and/or titanium.

**5.** Barrier layer composition according to one or more of the preceding claims,
**characterized in that**
said terpolymer or copolymer contains methylvinylether as vinyl monomer, styrene and/or an acrylic ester.

**6.** Barrier layer composition according to one or more of the preceding claims,
**characterized in that**
said metal oxide sol is a mixed oxide sol of tetraethoxysilane, glycidyloxypropyl triethoxysilane, and aluminium triisobutylate, or of tetraethoxysilane, glycidyloxypropyl triethoxysilane, and 2-ethyl hexyltitanate.

7.  Barrier layer composition according to one or more of the preceding claims,
    **characterized in that**
    said cross-linking catalyst is triethylamine, tributylamine or DABCO®.

8.  Barrier layer composition according to one or more of the preceding claims,
    **characterized in that**
    said barrier layer composition additionally contains 0.1-25 % by weight, based on the total composition, of additives which are compatible with the barrier layer composition.

9.  Barrier layer composition according to claim 8,
    **characterized in that**
    said additives are coloring agents.

10. Polyolefin hollow body
    **characterized in that**
    said hollow body has at least one coating with a barrier layer composition according to one or more of the preceding claims.

11. Polyolefin hollow body according to claim 10,
    **characterized in that**
    said polyolefin is polyethylene or polypropylene or PET.

12. Use of the composition according to one or more of the preceding claims for the application of at least one barrier layer to polyolefin bodies, preferably polyolefin hollow bodies.


**Revendications**

1.  Composition de revêtement barrière pour un corps en polyoléfine, **caractérisée en ce que**
    la composition de revêtement barrière contient essentiellement les ingrédients suivants :

    a) de 40 à 70 % en poids d'un ou de plusieurs sol(s) d'oxyde métallique contenant un époxyde;
    b) de 25 à 55 % en poids d'un liant polymère constitué d'un terpolymère acide maléique - anhydride maléique - monomère vinylique et/ou d'un copolymère acide maléique - monomère vinylique ayant une composition molaire de 50 à 75 % en monomère vinylique, de 5 à 50 % en acide maléique, et de 0 à 20 % en anhydride maléique; et
    c) 0,1 à 5 % en poids d'un catalyseur à base d'une ou de plusieurs amine(s) tertiaire(s).

2.  Composition de revêtement barrière selon la revendication 1, **caractérisée en ce que**
    la composition de revêtement barrière contient essentiellement les ingrédients suivants :

    a) 45 à 65 % en poids d'un ou de plusieurs sol(s) d'oxyde métallique contenant un époxyde;
    b) 30 à 50 % en poids d'un liant polymère constitué d'un terpolymère acide maléique - anhydride maléique - monomère vinylique et/ou d'un copolymère acide maléique - monomère vinylique ayant une composition molaire de 50 à 75 % en monomère vinylique, de 5 à 50 % en acide maléique, et de 0 à 20 % en anhydride maléique; et
    c) 2 à 5 % en poids d'un catalyseur à base d'une ou de plusieurs amines) tertiaire(s);

    ou bien :

    a) de 45 à 55 % en poids d'un ou de plusieurs sol(s) d'oxyde métallique contenant un époxyde;
    b) de 40 à 50 % en poids d'un liant polymère constitué d'un terpolymère acide maléique - anhydride maléique - monomère vinylique et/ou d'un copolymère acide maléique - monomère vinylique ayant une composition molaire de 50 à 75 % en monomère vinylique, de 5 à 50 % en acide maléique, et de 0 à 20 % en anhydride maléique; et
    c) de 3 à 5 % en poids d'un catalyseur à base d'une ou de plusieurs amine(s) tertiaire(s).

3.  Composition de revêtement barrière selon la revendication 1 ou 2, **caractérisée en ce que**

les sols d'oxyde métallique contenant un époxyde sont des glycidylalcoxysilanes traités par hydrolyse acide.

4. Composition de revêtement barrière selon l'une ou plusieurs des revendications précédentes, **caractérisée en ce que** le sol d'oxyde métallique contenant un époxyde est un hydrolysat mixte de glycidylsilane avec des alcoxylates à base d'aluminium et/ou de titane.

5. Composition de revêtement barrière selon l'une ou plusieurs des revendications précédentes, **caractérisée en ce que** le tert- ou le co-polymère contient, à titre de monomère vinylique, de l'éther méthylvinylique, du styrène et/ou un ester acrylique.

6. Composition de revêtement barrière selon l'une ou plusieurs des revendications précédentes, **caractérisée en ce que** le sol d'oxyde métallique est un sol à base d'un mélange d'oxydes obtenu à partir de tétraéthoxysilane, de glycidyloxypropyltriéthoxysilane et de tri-isobutylate d'aluminium, ou bien de tétraéthoxysilane, de glycidyloxypropyltriméthoxysilane et de titanate de 2-éthylhexyle.

7. Composition de revêtement barrière selon l'une ou plusieurs des revendications précédentes, **caractérisée en ce que** le catalyseur de réticulation est de la triéthylamine, de la tributylamine, ou du DABCO®.

8. Composition de revêtement barrière selon l'une ou plusieurs des revendications précédentes, **caractérisée en ce que** la composition contient, en outre, de 0,1 à 25 % en poids, par rapport à l'ensemble de la composition, d'additifs compatibles avec la composition de revêtement barrière.

9. Composition de revêtement barrière selon la revendication 8, **caractérisée en ce que** les additifs sont des colorants.

10. Corps en polyoléfine, **caractérisé en ce que** il est recouvert d'au moins une couche de composition de revêtement barrière selon l'une ou plusieurs des revendications précédentes.

11. Corps en polyoléfine selon la revendication 10, **caractérisé en ce que** la polyoléfine est du polyéthylène, du polypropylène, ou du PET.

12. Utilisation de la composition selon l'une ou plusieurs des revendications précédentes pour appliquer au moins une couche barrière sur un corps en polyoléfine, de préférence sur un corps creux en polyoléfine.